**Europäisches Patentamt**

**European Patent Office**

**Office européen des brevets**

(19)

(11) Veröffentlichungsnummer: **0 270 960 B1**

## EUROPÄISCHE PATENTSCHRIFT

(12)

(45) Veröffentlichungstag der Patentschrift: **08.01.92**

(51) Int. Cl.⁵: **G01F 1/28, H01H 35/40**

(21) Anmeldenummer: **87117642.6**

(22) Anmeldetag: **28.11.87**

(54) **Strömungswächter.**

(30) Priorität: **09.12.86 DE 8632832 U**

(43) Veröffentlichungstag der Anmeldung:
**15.06.88 Patentblatt 88/24**

(45) Bekanntmachung des Hinweises auf die
Patenterteilung:
**08.01.92 Patentblatt 92/02**

(84) Benannte Vertragsstaaten:
**AT BE CH DE ES FR GB IT LI NL SE**

(56) Entgegenhaltungen:
**DE-A- 2 926 811**
**DE-A- 3 317 923**
**US-A- 4 377 090**

(73) Patentinhaber: **Kobold, Klaus**
**Sodener Strasse 120**
**W-6233 Kelkheim(DE)**

(72) Erfinder: **Kobold, Klaus**
**Sodener Strasse 120**
**W-6233 Kelkheim(DE)**

(74) Vertreter: **Keil, Rainer A., Dipl.-Phys. Dr. et al**
**KEIL & SCHAAFHAUSEN Patentanwälte Eys-**
**seneckstrasse 31**
**W-6000 Frankfurt am Main 1(DE)**

## Beschreibung

Die Erfindung bezieht sich auf einen Strömungswächter in Anordnung an einem von dem zu überwachenden Medium zu durchströmenden Leitungsstück, mit einem Betätigungselement, welches gegen die Kraft einer Feder auslenkbar an einem Träger derart gehalten ist, daß sich ein Anströmteil durch eine Öffnung in der Wandung des Leitungsstückes bis in den Strömungsweg des Mediums erstreckt und daß das andere Ende des Betätigungselements in ein sich über der Öffnung des Leitungsstücks erhebendes, mit diesem lösbar verbundenes Gehäuse hineinragt und einen Permanentmagneten trägt, der dazu ausgebildet ist, bei Auslenkung des Betätigungselements einen in Art eines Reed-Kontaktes ausgebildeten Schalter eines Stromkreises zu betätigen, welcher von einer Schutzumhüllung umgeben in einer Durchgangsöffnung des Gehäuses aufgenommen ist.

Bei bekannten Strömungswächtern dieser Art sind Betätigungselement, Feder und Gehäuse fest und unlösbar miteinander verbunden. Dabei ist das Betätigungselement über eine Blattfeder an der Stützplatte angebracht, die fest in dem Gehäuse sitzt. In der Stützplatte ist eine kleine Durchtrittsöffnung für das Betätigungselement vorgesehen, das sich über eine in einem Leitungsstutzen vorgesehene Öffnung des Leitungsstücks mit seinem Anströmteil in den Strömungsweg des zu überwachenden Mediums in das Leitungsinnere erstreckt. Die Verbindung zwischen Gehäuse und Leitungsstück erfolgt über eine lösbare Flanschverbindung. Der den Schalter bei Auslenkung des Betätigungselements betätigende Permanentmagnet befindet sich in dem mit dem Leitungsstück in Verbindung stehenden unzugänglichen Innenraum des Gehäuses. Der von einer Schutzumhüllung umgebende als Reed-Kontakt ausgebildete Schalter ist am äußeren Ende des Gehäuses angeordnet. Hierzu besitzt das gewöhnlich einen zylindrischen Querschnitt aufweisende Gehäuse einen axialen Fortsatz, welcher mit einer quer zur Längsachse des zylindrischen Gehäuses angeordneten Durchgangsöffnung zur Aufnahme der den Schalter enthaltenden Schutzumhüllung versehen ist. Zur Arretierung der Schutzumhüllung mit Schalter ist eine senkrecht zur Längsachse der Durchgangsöffnung angeordnete Arretierschraube vorgesehen. Da das zu überwachende Medium bei Betrieb des Strömungswächters in den Innenraum des Gehäuses eintritt, sind die dort angeordneten Teile aufgrund der vom Medium mitgeführten Verunreinigung einer Verschmutzung ausgesetzt. Insbesondere werden durch die Wirkung des Permanentmagneten im Medium enthaltene magnetisierbare Partikel angezogen, deren Ablagerungen nach einiger Zeit die Funktionsfähigkeit des Systems beeinflussen können. Daher müssen die Strömungswächter von Zeit zu Zeit einer Reinigung unterworfen werden. Wegen der fehlenden Zugänglichkeit der im Gehäuseinnern angeordneten Teile ist jedoch eine Reinigung praktisch nicht möglich. Ein weiterer Nachteil der bekannten Strömungswächter besteht darin, daß die Justierung des Anströmteils im Strömungsweg des Mediums bei der nach einer Reinigung durchzuführenden Montage mit erheblichem Zeitaufwand verbunden ist. Auch hat sich gezeigt, daß es bei der Arretierung des in der Durchgangsöffnung des Gehäusefortsatzes mit Schutzumhüllung einzuschiebenden Schalters wegen der Nachgiebigkeit der han delsüblichen Schutzumhüllungen der Reed-Kontakte zu Beschädigungen derselben kommt.

In der DE-A-3 317 923 ist ein Durchflußschalter mit einem in einen Fluidstrom ragenden Paddel dargestellt, bei dem eine Paddelhalterung mittels eines Preßsitzes in einem Oberteil fixiert ist, in welcher eine das Paddel tragende Paddelstange entgegen der Kraft einer Feder schwenkbar gelagert ist, wobei am oberen Ende der Paddelstange ein Permanentmagnet angebracht ist, welcher einen über eine Exzentereinrichtung verstellbaren und durch ein getrenntes Element in verschiedenen Positionen fixierbaren Reedschalter betätigt. Der Nachteil dieses bekannten Durchflußschalters liegt zum einen in seiner schwierigen Montage bzw. Demontage aufgrund des Preßsitzes zwischen Paddelhalterung und Oberteil, so daß sich insbesondere eine Reinigung des in dem Oberteil angeordneten Permanentmagneten sehr schwierig gestaltet, zum anderen darin, daß aufgrund der nicht eindeutigen Stellung der einzelnen Bauteile zueinander auch die Schaltpunkte des Durchflußschalters nicht definiert sind. Beim Austausch einzelner Bauteile muß der gesamte Durchflußschalter jedesmal neu einjustiert werden.

Die US-A-4 377 090 beschreibt einen Durchflußmesser, bei dem eine Blende durch die Strömung gegen die Kraft einer Feder bewegt wird und ab einer festgelegten Position, die einer bestimmten Durchflußrate entspricht, einen Reedschalter betätigt. Die Umströmung der Blende führt selbst bei einer Ausführung als Lochblende zu einem relativ hohen Druckverlust in der Leitung, der bei vielen Anwendungsformen unerwünscht ist. Außerdem bedingt die Anordnung der Blende, die über die Feder im Zentrum der Strömung gehalten wird, einen hohen Montage-und Wartungsaufwand, da bei Reparatur- oder Reinigungsarbeiten immer direkt in die Strömung eingegriffen oder sogar der gesamte Leitungsabschnitt demontiert werden muß.

Die Aufgabe der Erfindung besteht darin, unter Vermeidung der dem Stand der Technik anhaftenden Nachteile den Gebrauchszweck eines Strömungswächters der eingangs genannten Art zu verbessern, wobei insbesondere eine einfachere Wartung mit einer besseren Reinigungsmöglichkeit erreicht werden soll. Neben einer besseren Zugänglichkeit für die zu reinigenden Teile soll daneben eine einfachere Montage mit genauer und schneller Fixierung des Anströmteils im Strömungsweg des Mediums ermöglicht werden, ferner eine störungsfreie Montage des Schalters bzw. seiner Schutzumhüllung.

Diese Aufgabe wird erfindungsgemäß im wesentlichen dadurch gelöst, daß der Träger als Stützplatte ausgebildet ist, welche zur Sicherung ihrer Drehorientierung mit einer Nase in eine an der Öffnung in der Wandung des Leitungsstücks ausgebildete Nut und mit derselben oder einer anderen Nase in eine an dem Gehäuse ausgebildete Nut eingreift, wobei die Stützplatte lösbar ist und wobei die Schutzumhüllung des Schalters und die Stützplatte verdrehsicher an dem Gehäuse gehalten.

Hierdurch wird erreicht, daß beim Abnehmen des üblicherweise an das Leitungsstück angeschraubten Gehäuses das Betätigungselement ohne weiteres von dem Gehäuse abgenommen werden kann. Auf diese Weise ist eine Reinigung auch des im Montagezustand in das Gehäuse hineinragenden Endes des Betätigungselements mit dem Permanentmagneten sowie des Gehäuseinneren leicht durchzuführen. Wegen der verdrehsicheren Anordnung der Stützplatte an dem Gehäuse erhält das Betätigungselement bei einfacher Montage seine die Funktionsfähigkeit gewährleistende Orientierung relativ zu dem Schalter.
Die richtige Orientierung der Anströmfläche des in den Strömungsweg des Leitungsstückes hineinragenden Anströmteils wird dadurch gesichert, daß die Stützplatte eine umfangsseitige Nase zum Eingreifen in eine an der Öffnung der Wandung des Leitungsstückes ausgebildeten Nut aufweist. Nach Festlegung des Gehäuses und der Stützplatte an dem Leitungsstück wird hierdurch nicht nur die Verdrehsicherheit sämtlicher Teile sondern auch die gewünschte Orientierung des an der Stützplatte angebrachten Betätigungselements gewährleistet. Dieselbe oder eine andere Nase der Stützplatte greift in eine Nut am unteren Rand des Gehäuses ein, so daß auf die Drehorientierung des Betätigungselementes gegenüber dem Gehäuse und damit auch dem zu betätigenden Schalter bei einfacher Montage und Demontage fest vorgegeben ist. In diesem Zusammenhang sind die Nut und die an der das Betätigungselement haltenden Stützplatte vorgesehene Nase derart angeordnet, daß das Anströmteil des Betätigungselements mit seiner Anströmfläche senkrecht zum Strömungsweg des Mediums steht. Dadurch erfolgt bei Neumontage bzw. bei erneuter Montage nach einer Reinigung zwangsläufig durch das Einsetzen der Stützplatte in die Stirnfläche des Leitungsstückes die erforderliche Justierung des Anströmteils in optimaler Lage zur Strömungsrichtung. Dadurch daß die Schutzumhüllung des Schalters verdrehsicher an dem Deckel und/oder an der Durchgangsöffnung des Gehäuses gehalten ist, erhält der in der Schutzhülle untergebrachte Schalter nach Montage die durch den Permanentmagnet vorgegebene richtige Orientierung.

Eine besonders einfache und sichere Montage des lösbaren Betätigungselements ist dann möglich, wenn sich die Stützplatte gegen eine Schulter an der mit dem unteren Rand des Gehäuses zur Anlage kommenden Stirnfläche der Öffnung der Wandung des Leitungsstücks abstützt.

Vorteilhafterweise ist zur Lösung der gestellten Aufgabe die Stützplatte zwischen der Schulter und einer an der Innenseite des unteren Randes des Gehäuses ausgebildeten Schulter im wesentlichen formschlüssig aufgenommen, so daß eine weitgehend spielfreie Montage möglich ist.

Mit der Erfindung wird ferner vorgeschlagen, einen Strömungswächter bei welchem die Stirnfläche des Leitungsstücks von einem radial gegenüber diesem nach außen vorstehenden Flansch gebildet ist, der umfangsseitig ein Schraubgewinde mit zugeordneter Überwurfmutter aufweist, die mit einer Schulter die Rückseite eines den unteren Rand des Gehäuses bildenden Flansches übergreift, dadurch weiter auszubilden, daß die vorzugsweise scheibenförmige Stützplatte zwischen einem Flansch des Gehäuses und einem Flansch an der Öffnung der Wandung des Leitungsstucks eingespannt ist. Auf diese Weise wird beim Anschrauben des Gehäuses an das Leitungsstück gleichzeitig auch die Stützplatte festgelegt.

Dabei kann der dem Leitungsstück zugeordnete Flansch eine Ringnut mit Dichtring aufweisen.

Bei einem Strömungswächter, bei welchem die sich ggf. an einen Flansch anschließende Gehäusewandung im wesentlichen als Zylinderkappe ausgebildet ist, welche an ihrem äußeren Ende eine zur Aufnahme der Schutzumhüllung des Schalters vorgesehene Durchgangsöffnung aufweist, ist gemäß einem weiteren Erfindungsmerkmal zur störungsfreien Festlegung des Schalters mit Schutzumhüllung vorgesehen, daß die Schutzumhüllung mit dem Schalter mittels eines unter Freihaltung der Durchgangsöffnung befestigbaren Deckels an dem Gehäuse gehalten ist.

Dies kann zweckmäßigerweise dadurch verwirklicht ein, daß die Durchgangsöffnung zur Aufnahme der Schutzumhüllung des Schalters von einer Aussparung an dem Ende des Gehäuses und einer Aussparung an dem Deckel gebildet ist. Dadurch kann der Schalter mit seiner Schutzumhüllung großflächig zwischen Gehäuseende und Deckel ohne die Gefahr einer Beschädigung eingespannt werden.

Alternativ hierzu kann die Schutzumhüllung des Schalters eine Abflachung ihrer Umfangswandung im Bereich ihrer mit einer im wesentlichen plan gehaltenen Oberfläche des Deckels in Anlage kommenden Oberfläche aufweisen.

Die richtige Orientierung des Schalters gegenüber dem Wirkbereich kann insbesondere dann gesichert werden, wenn die Drehsicherung als Nut-Feder-System ausgebildet ist.

Der Deckel ist vorzugsweise mittels Schraubverbindung an dem Gehäuse unter großflächiger Einspannung der Schutzumhüllung des Schalters in der Durchgangsöffnung angebracht.

Wird das Gehäuse nicht von einer Zylinderkappe sondern beispielsweise einem auch am äußeren Ende offenen Rohrstück gebildet, so legt sich der Deckel zum Einspannen des Schalters mit Schutzumhüllung und letztere selbst vorzugsweise dichtend an den freien Rand des Gehäuses an, so daß ein Austritt des strömenden Mediums vermieden wird.

Mindestens das Gehäuse besteht vorzugsweise aus nicht magnetisierbarem Material, wie Messing, Kunststoff o.dgl..

Weitere Ziele, Merkmale, Vorteile und Anwendungsmöglichkeiten der vorliegenden Erfindung ergeben sich aus der nachfolgenden Beschreibung eines Ausführungsbeispiels anhand der Zeichnung.

Es zeigen:

Fig. 1    eine perspektivische auseinandergezogene Darstellung, teilweise geschnitten, der Teile einer möglichen Ausführungsform eines Stromwächters nach der Erfindung und

Fig. 2    eine perspektivische Darstellung eines Teilabschnittes des Gehäuses gegenüber Fig. 1 vergrößert und umgedreht.

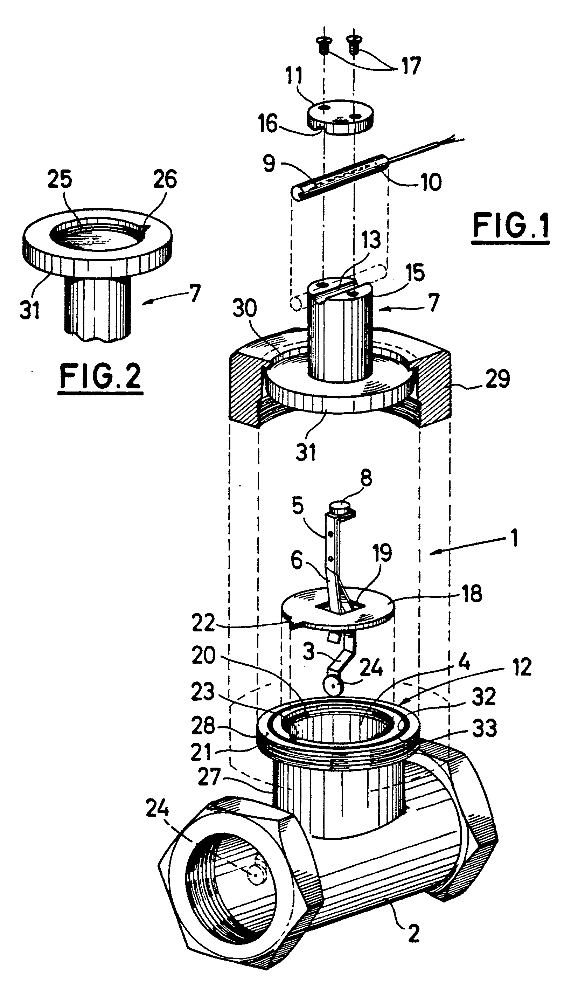

Die in Fig. 1 dargestellte mögliche Ausführungsform eines Stromwächters 1 weist im wesentlichen ein von dem zu überwachenden Medium zu durchströmendes mit einem seitlichen Leitungsstutzen 27 versehenes Leitungsstück 2, ein Betätigungselement 5, ein kappenförmiges Gehäuse 7, einen von der Schutzumhüllung 10 umgebenden als Reed-Kontakt ausgebildeten Schalter 9 sowie einen Deckel 11 auf. Das Leitungsstück 2 besitzt in dem Leitungsstutzen 27 eine Öffnung 4, welche von einem mit äußerem Schraubgewinde 28 versehenen Flansch 12 umgeben ist. Die Stirnfläche 21 des Flansches 12 weist eine etwas axial zurückgesetzte Schulter 20 auf, auf welcher eine das Betätigungselement 5 tragende Stützplatte 18 im montierten Zustand aufsitzt, wobei eine am äußeren Rand der Stützplatte 18 radial vorgesehene Nase 22 in eine dazu passende in der Stirnfläche 21 des Flansches 27 ausgebildete radiale Nut 23 eingreift.

Die Stützplatte 18 weist eine Durchtrittsöffnung 19 für das Betätigungselement 5 auf, welches an seinem Oberen Ende einen Permanentmagneten 8 trägt und nach unten in das mit der Anströmfläche 24 versehene Anströmteil 3 übergeht. Das Betätigungselement 5 ist von einer als Blattfeder ausgebildeten Feder 6 auslenkbar in mittlerer Stellung gehalten, welche an der Innenwandung der Durchtrittsöffnung 19 mit der Stützplatte 18 verbunden ist. Bei Aufsitzen der Stützplatte 18 auf der in der Stirnfläche 21 ausgebildeten Schulter 20 ragt das Betätigungselement 5 mit seinem Anströmteil 3 in das Innere des Leitungsstückes 2, wobei durch die in die Nut 23 eingreifende Nase 22 der Stützplatte 18 die Anströmfläche 24 gegenüber dem Strömungsweg des Mediums selbsttätig senkrecht ausgerichtet ist und diese fixierte Lage auch bei der nachfolgenden Verbindung des Gehäuses 7 mit dem Leitungsstück 2 beibehalten wird.

Die Verbindung zwischen dem einen zylinderförmigen Gehäuse 7 und dem Leitungsstück 2 erfolgt über eine Überwurfmutter 29, welche mit einer nach innen übergreifenden Schulter 30 auf dem Rücken eines am vorderen Ende des Gehäuses 7 angeordneten Flansches 31 drehbar zur Anlage kommt und auf das Schraubgewinde 28 aufschraubbar ist. Um eine gas- und/oder flüssigkeitsdichte Abdichtung der Flanschverbindung 12, 31 zu erreichen, weist die Stirnfläche 21 des Flansches 12 eine Ringnut 32 mit eingelegtem Dichtring 33 auf. Wie aus Fig. 2 ersichtlich weist die Stirnfläche des Flansches 31 des Gehäuses 7 eine zum Auflegen auf die Oberseite der Stützplatte 18 kommende Schulter 25 mit einer radialen Nut 26 für die Nase 22 der Abstützplatte 18 auf, wobei im zusammengebauten Zustand die Stützplatte 18 mit Nase 22 zwischen der an der Stirnfläche 21 des Flansches 12 mit zugeordneter Nut 23 und der an der Innenseite des Flansches 31 ausgebildeten Schulter 25 mit zugeordneter Nut 26 formschlüssig aufgenommen ist. Hierdurch wird bei der Montage gleichzeitig eine Fixierung des Gehäuses 7 erreicht, dessen an ihrem oberen Ende vorgesehene rinnenförmige Aussparung 13 die Lage der den Schalter 9 umgebenden Schutzumhüllung 10 gegenüber dem Wirkbereich des Permanentmagneten 8 festlegt.

Diese Aussparung 13 ist in einen sich an die zylindrische Gehäusewandung 15 anschließenden Ansatz des kappenförmigen Gehäuses 7 vorgesehen. Im zusammengebauten Zustand liegt die in dem gezeigten Ausführungsbeispiel als Hülse ausgebildete und den Schalter 9 enthaltende Schutzumhüllung 10 in der Aussparung 13.

Der Deckel 11 weist auf seiner Unterseite eine der Aussparung 13 entsprechend rinnenförmige Aussparung 16 aus. Beim Anschrauben des Deckels 11 an das Gehäuse 7 mittels Schrauben 17 bilden die Aussparungen 13 und 16 eine Durchtrittsöffnung für die großflächig einspannbare Aufnahme des Schalters 9 mit Schutzumhüllung 10.

Durch die Erfindung wird ein Strömungswächter geschaffen, der eine gute Zugänglichkeit für eine Wartung und Reinigung der zu Verschmutzungen neigenden Teile besitzt, sowie eine selbsttätige Fixierung des Anströmteils bzw. seiner Anströmfläche im Strömungsweg des Mediums und zugleich eine Ausrichtung des Schalters im Wirkbereich des Permanentmagneten während der Montage des Strömungswächters erlaubt. Der Schalter kann störungsfrei montiert werden.

Bezugszeichenliste:

| | |
|---|---|
| 1 | Strömungswächter |
| 2 | Leitungsstück |
| 3 | Anströmteil |
| 4 | Öffnung |
| 5 | Betätigungselement |
| 6 | Feder |
| 7 | Gehäuse |
| 8 | Permanentmagnet |
| 9 | Schalter |
| 10 | Schutzumhüllung |
| 11 | Deckel |
| 12 | Flansch |
| 13 | Aussparung |
| 15 | Gehäusewandung |
| 16 | Aussparung |
| 17 | Schrauben |
| 18 | Stützplatte |
| 19 | Durchtrittsöffnung |
| 20 | Aussparung |
| 21 | Stirnfläche |
| 22 | Nase |
| 23 | Nut |
| 24 | Anströmfläche |
| 25 | Aussparung |
| 26 | Nut |
| 27 | Leitungsstutzen |
| 28 | Schraubgewinde |
| 29 | Überwurfmutter |
| 30 | Schulter |
| 31 | Flansch |
| 32 | Ringnut |
| 33 | Dichtring |

**Patentansprüche**

1. Strömungswächter (1) in Anordnung an einem von dem zu überwachenden Medium zu durchströmenden Leitungsstück (2), mit einem Betätigungselement (5), welches gegen die Kraft einer Feder (6) auslenkbar an einem Träger derart gehalten ist, daß sich ein Anströmteil (3) durch eine Öffnung (4) in der Wandung des Leitungsstucks (2) bis in den Strömungsweg des Mediums erstreckt und daß das andere Ende des Betätigungselements (5) in ein sich über der Öffnung (4) des Leitungsstücks (3) erhebendes, mit diesem lösbar verbundenes Gehäuse (7) hineinragt und einen Permanentmagneten (8) trägt, der dazu ausgebildet ist, bei Auslenkung des Betätigungselements (5) einen in Art eines Reed-Kontaktes ausgebildeten Schalter (9) eines Stromkreises zu betätigen, welcher von einer Schutzumhüllung (10) umgeben in einer Durchgangsöffnung des Gehäuses (7) aufgenommen ist, dadurch gekennzeichnet, daß der Träger als Stützplatte (18) ausgebildet ist, welche zur Sicherung der Drehorientierung mit einer Nase (22) in eine an der Öffnung (4) in der Wandung des Leitungsstücks (2) ausgebildete Nut (23) und mit derselben oder einer anderen Nase in eine an dem Gehäuse (7) ausgebildete Nut (26) eingreift, wobei die Stützplatte (18) lösbar ist und wobei die Schutzumhüllung (10) des Schalters (9) und die Stützplatte (18) verdrehsicher an dem Gehäuse (7) gehalten sind.

2. Strömungswächter nach Anspruch 1, dadurch gekennzeichnet, daß sich die Stützplatte (18) gegen eine Schulter (20) an der mit dem unteren Rand des Gehäuses (7) zur Anlage kommenden Stirnfläche (21) der Öffnung (4) der Wandung des Leitungsstücks (2) abstützt.

3. Strömungswächter nach Anspruch 2, dadurch gekennzeichnet, daß die Stützplatte (18) zwischen der Schulter (20) und einer an der Innenseite des unteren Randes des Gehäuses (7) ausgebildeten Schulter (25) im wesentlichen formschlüssig aufgenommen ist.

4. Strömungswächter nach einem der Ansprüche 1 bis 3, dadurch gekennzeichnet, daß die Stützplatte (18) zwischen einem Flansch (31) des Gehäuses (7) und einem Flansch (12) an der Öffnung (4) der Wandung des Leitungsstücks (2) eingespannt ist.

5. Strömungswächter nach Anspruch 4, dadurch gekennzeichnet, daß der dem Leitungsstück (2) zugeordnete Flansch (12) eine Ringnut (32) mit Dichtring (33) aufweist.

6. Strömungswächter nach einem der Ansprüche 1 bis 5, dadurch gekennzeichnet, daß die Gehäusewandung (15) im wesentlichen als Zylinderkappe ausgebildet ist, welche an ihrem äußeren Ende eine zur Aufnahme der Schutzumhüllung (10) des Schalters (9) vorgesehene Durchgangsöffnung (13, 16) aufweist, und daß die Schutzumhüllung (10) mit dem Schalter (9) mittels eines unter Freihaltung der Durchgangsöffnung (13, 16) befestigbaren Deckels (11) an dem Gehäuse (7) gehalten ist.

7. Strömungswächter nach Anspruch 6, dadurch gekennzeichnet, daß die Durchgangsöffnung (13,16) zur Aufnahme der Schutzumhüllung (10) des Schalters (9) von einer Aussparung (13) an dem Ende des Gehäuses (7) und einer Aussparung (16) an dem Deckel (11) gebildet ist.

8. Strömungswächter nach Anspruch 6, dadurch gekennzeichnet, daß die Schutzumhüllung (10) des Schalters (9) im Bereich ihrer mit einer plan gehaltenen Oberfläche des Deckels (11) in Anlage kommenden Oberfläche ihrer Umfangswandung abgeflacht ist.

9. Strömungswächter nach einem der Ansprüche 1 bis 8, dadurch gekennzeichnet, daß die Verdrehsicherung für die Schutzumhüllung (10) des Schalters (9) als Nut-Feder-System ausgebildet ist.

10. Strömungswächter nach einem der Ansprüche 6 bis 8, dadurch gekennzeichnet, daß der Dek-kel (11) mittels Schraubverbindung (17) an dem Gehäuse (7) unter großflächiger Einspannung der Schutzumhüllung (10) des Schalters (9) in der Durchgangsöffnung (13, 16) angebracht ist.

11. Strömungswächter nach einem der vorangehenden Ansprüche, dadurch gekennzeichnet, daß mindestens das Gehäuse (7) aus nicht-magnetisierbarem Material, wie Messing, Kunststoff o.dgl. besteht.

**Claims**

1. A flow monitor (1) mounted on a pipeline section (2) through which the medium to be monitored flows, having an actuator (5) secured to a carrier, deflectably against the force of a spring (6), in a manner such that its vane (3) extends through an aperture (4) in the wall of the pipeline section (2) into the path of the medium stream, the other end of the actuator (5) extending into a housing (7) mounted over the aperture (4) in the pipeline section (3), to which it is releasably attached, and carrying a permanent magnet (8) so adapted that when the actuator (5) is deflected it actuates a current circuit switch (9) of the Reed-contact type which is surrounded by a protective sleeve (10) accommodated in a through bore in the housing (7), characterized in that the carrier is adapted as a mounting plate (18) secured against rotation by a nose (22) which engages in a groove (23) in the wall of the pipeline section (2) at the aperture (4), the same or another nose engaging in a groove (26) in the housing (7, the mounting plate (18) being releasable, and the mounting plate (18) and the protective sleeve (10) round the switch (9) being secured against rotation in the housing (7).

2. A flow monitor as in Claim 1, characterized in that the mounting plate (18) rests against a shoulder (20) on the rim face (21) of the aperture (4) in the wall of the pipeline section (2) mating with the lower rim of the housing (7).

3. A flow monitor as in Claim 2, characterized in that the mounting plate (18) is substantially locked rigidly between the shoulder (20) and a shoulder (25) formed on the inside of the lower rim of the housing (7).

4. A flow monitor as in any of Claims 1 to 3, characterized in that the mounting plate (18) is tightly locked between a flange (31) on the housing (7) and a flange (12) on the aperture (4) in the wall of the pipeline section (2).

5. A flow monitor as in Claim 4, characterized in that the flange (12) on the pipeline section (2) has an annular groove (32) with a sealing ring (33).

6. A flow monitor as in any of Claims 1 to 5, characterized in that the housing wall (15) is adapted substantially as a cylinder cap, having at its outer end a through bore (13,16) to accommodate the protective sleeve (10) round the switch (9), the protective sleeve (10) and the switch (9) being held on the housing (7) by a securable cover (11) which leaves the through bore (13,16) unobstructed.

7. A flow monitor as in Claim 6, characterized in that the through bore (13,16) accommodating the protective sleeve (10) round the switch (9) consists of a recess (13) on the end of the housing (7) and a recess (16) on the cover (11).

8. A flow monitor as in Claim 6, characterized in that the protective sleeve (10) round the switch (9) is flattened where its wall surface comes into contact with the now unrecessed surface of the cover (11).

9. A flow monitor as in any of Claims 1 to 8, characterized in that the means for securing the protective sleeve (10) round the switch (9) against rotation is adapted as a tongue and groove system.

10. A flow monitor as in any of Claims 6 to 8, characterised in that the cover (11) is secured on the housing (7) by means of screws (17), locking the protective sleeve (10) round the switch (9) over a large area in the through bore (13,16).

11. A flow monitor as in any of the foregoing claims, characterized in that at least the housing (7) is made from a non-magnetizable material, such as brass, synthetic resin or the like.

**Revendications**

1. Dispositif de surveillance de l'écoulement (1) monté sur un tronçon de tuyauterie (2) parcouru par le fluide à surveiller, comportant un élément de commande (5), qui est monté sur un support avec possibilité de déplacement à l'encontre de la force d'un ressort (6) de manière telle, qu'une partie immergée (3) pénètre par une ouverture (4) de la paroi du tronçon de tuyauterie (2) jusque dans le trajet d'écoulement du fluide et que l'autre extrémité de l'élément de commande (5) fait saillie dans un boîtier (7) placé au-dessus de l'ouverture (4) du tronçon de tuyauterie (2) et relié de manière démontable à celui-ci, et porte un aimant permanent (8) conçu de manière à commander, lors d'une déviation de l'élément de commande (5), un commutateur (9) d'un circuit se présentant sous la forme d'un contact de Reed, qui est entouré d'une enveloppe protectrice (10) et est logé dans une ouverture du boîtier (7), caractérisé en ce que le support est réalisé sous la forme d'une plaque-support (18) qui s'engage à des fins de positionnement angulaire, par un ergot (22) dans une rainure (23) aménagée au niveau de l'ouverture (4) dans la paroi du tronçon de tuyauterie (2), et par ce même ergot ou par un ergot supplémentaire, dans une rainure (26) aménagée dans le boîtier (7), la plaque-support (18) étant démontable, l'enveloppe protectrice (10) du commutateur (9) et la plaque-support (18) étant maintenus fixes en rotation.

2. Dispositif de surveillance de l'écoulement selon la revendication 1, caractérisé en ce que la plaque-support (18) repose sur un épaulement (20) de la surface frontale (21) de l'ouverture (4) dans la paroi du tronçon de tuyauterie (2), venant en contact avec le bord inférieur du boîtier (7).

3. Dispositif de surveillance de l'écoulement selon la revendication 2, caractérisé en ce que la plaque-support (18) est montée essentiellement par conjugaison de formes entre l'épaulement (20) et un épaulement (25) aménagé sur la face intérieure du bord inférieur du boîtier (7).

4. Dispositif de surveillance de l'écoulement selon l'une des revendications 1 à 3, caractérisé en ce que la plaque-support (18) est serrée entre une bride (31) du boitier (7) et une bride (12) de l'ouverture (4), dans la paroi du tronçon de tuyauterie (2).

5. Dispositif de surveillance de l'écoulement selon la revendication 4, caractérisé en ce que la bride (12) associée au tronçon de tuyauterie (2) comporte une gorge annulaire (32) munie d'un joint d'étanchéité (33).

6. Dispositif de surveillance de l'écoulement selon l'une des revendications 1 à 5, caractérisé en ce que la paroi (15) du boîtier est réalisée essentiellement en forme de coiffe cylindrique, qui présente à son extrémité extérieure une ouverture (13, 16) pour le montage de l'enveloppe protectrice (10) du commutateur (9) et en ce que l'enveloppe protectrice (10) et le commutateur (9) sont tenus sur le boîtier (7) par un couvercle (11) qui peut être fixé en maintenant libre l'ouverture (13, 16).

7. Dispositif de surveillance de l'écoulement selon la revendication 6, caractérisé en ce que l'ouverture (13, 16) recevant l'enveloppe protectrice (10) du commutateur (9) est formée par un évidement (13) dans l'extrémité du boîtier (7) et par un évidement (16) dans le couvercle (11).

8. Dispositif de surveillance de l'écoulement selon la revendication 6, caractérisé en ce que l'enveloppe protectrice (10) du commutateur (9) est aplatie dans la région de sa paroi extérieure venant en contact avec une surface maintenue plane du couvercle (11).

9. Dispositif de surveillance de l'écoulement selon l'une des revendications 1 à 8, caractérisé en ce que l'immobilisation en rotation de l'enveloppe protectrice (10) du commutateur (9) est réalisée sous forme de système rainure-clavette.

10. Dispositif de surveillance de l'écoulement selon l'une des revendioations 6 à 8, caractérisé en ce que le couvercle (11) est monté au moyen d'un assemblage vissé (17) sur le boîtier (7) avec serrage sur une grande surface de l'enveloppe protectrice (10) du commutateur (9) dans l'ouverture (13, 16).

11. Dispositif de surveillance de l'écoulement selon l'une des revendications précédentes, caractérisé en ce que le boîtier (7) au moins est en matériau non magnétisable, tel que du laiton, de la matière plastique ou analogue.

FIG.1

FIG.2